# EUROPÄISCHE PATENTANMELDUNG

(11) **EP 0 569 679 A1**
(43) Veröffentlichungstag der Anmeldung: **18.11.1993**
(21) Anmeldenummer: 93103972.1
(22) Anmeldetag: 11.03.1993
(51) Int. Cl.: G02B 6/44

(54) **Optisches Flachkabel**

(30) Priorität: 11.05.1992 DE 4215476
(71) Anmelder: KABEL RHEYDT Aktiengesellschaft, D-41179 Mönchengladbach (DE)
(72) Erfinder: Zamzow, Peter, Dipl.-Ing., W-4630 Bochum 1 (DE); Hög, Georg, Dipl.-Ing., W-4050 Mönchengladbach 1 (DE)
(74) Vertreter: Mende, Eberhard, Dipl.-Ing.

(57) **Zusammenfassung**

Bei einem optischen Flachkabel mit Lichtwellenleitern in parallel einer Ebene angeordneten rohrförmigen Kammern sind die optischen Fasern (1) in Kammern (2) mit metallischer Wand mit Überlänge angeordnet. Die Kammern (2) sind mit Kunststoff ummantelt und derart verbunden, daß die Verbindungselemente (3, 4) auftrennbar und die Kammern (2) aus dem Flachkabel entnehmbar sind.

## Beschreibung

Die Erfindung betrifft ein optisches Flachkabel nach dem Oberbegriff des Anspruches 1.

Flachkabel werden für Steuerzwecke in einer Ausführung mit elektrischen Adern seit längerem eingesetzt. Die optische Nachrichtenübertragung wird mit Vorteil zur Übertragung von Information über längere Strecken verwendet. Im Ortsbereich werden zunehmend auch optische Kabel zur Versorgung von Teilnehmern eingesetzt. Ein besonderes Anwendungsgebiet ist ISDN, d. h. breitbandige Dienste, wie beispielsweise Fernsehen, Telefon und Mailboxen. Ein solches Ortsnetz kann in verschiedener Topologie aufgebaut werden. Einerseits wird die Sternanordnung und andererseits eine baumförmig verzweigte Struktur verwendet.

Zur Verlegung müssen aus dem Hauptkabel bei Nebenstraßen oder für Teilnehmer einzelne Kabel oder Adern abgezweigt werden. Zu diesem Zweck müßte ein Hauptkabel jeweils aufgetrennt und eine Muffe gesetzt werden. Ein solcher Abzweiger wäre aber sehr aufwendig, da die Kabel längswasserdicht sein müssen und daher mit einer entsprechenden Dichtmasse gefüllt sind, welche vor dem Auslaufen geschützt werden muß.

Der Erfindung liegt die Aufgabe zugrunde, ein Kabel zu schaffen, welches sich leicht verlegen läßt und an beliebigen Stellen zum Anschluß von Teilnehmerkabeln geeignet ist.

Diese Aufgabe wird durch die im Kennzeichen des Anspruches 1 aufgeführten Merkmale gelöst. Weiterbildungen der Erfindung sind in den Unteransprüchen enthalten.

Besondere Vorteile der Erfindung bestehen darin, daß durch die Metallumhüllung keine Feuchtigkeit an die empfindlichen Lichtwellenleiter oder optischen Fasern gelangen kann. Die bisher verwendeten Kunststoffröhrchen sind gegenüber Wasserdampf nicht diffusionsdicht und weisen den Nachteil auf, daß sie im Temperaturintervall von -40° C bis 80° C ein ungünstiges Schrumpf-Dehnungsverhalten zeigen. Man muß bei allen Überlegungen im Auge behalten, daß die Lichtwellenleiter nicht gestaucht und auch nicht mit Feuchtigkeit in Verbindung gebracht werden dürfen. Lichtwellenleiter, welche in einem Metallrohr gekapselt sind, lassen sich in dieser Form auch als Erdkabel verwenden. Sie sind äußerst robust und dennoch biegsam.

Die Erfindung wird nachstehend anhand der Zeichnungen näher erläutert; dabei zeigt Figur 1 ein Kabel mit einzeln heraustrennbaren Elementen, Figur 2 ein Flachkabel, bei welchem die Stege zwischen den einzelnen Elementen angeordnet sind und Figur 3 ein Kabel mit Elementen auf beiden Seiten eines Trägerbandes.

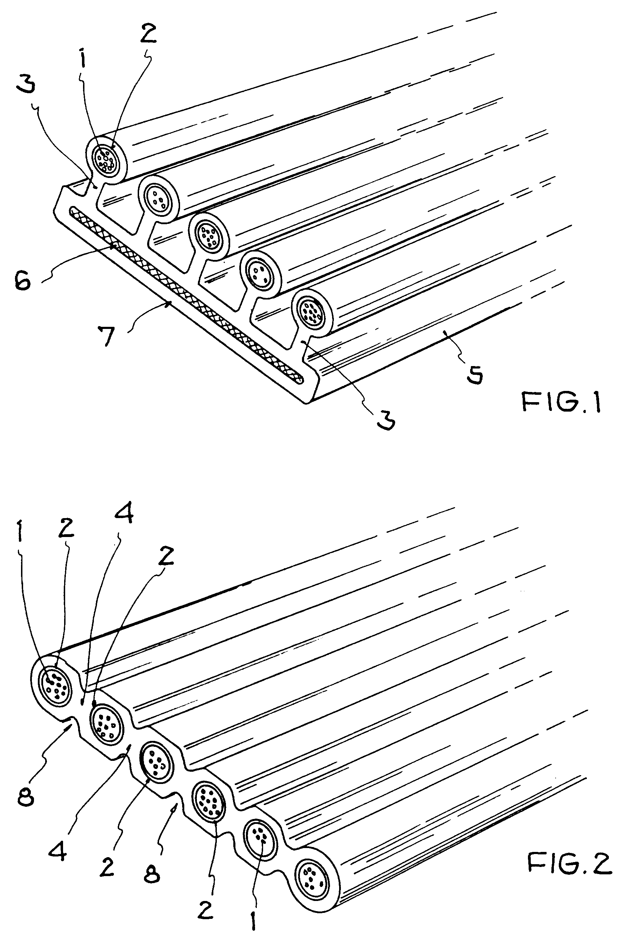

Das Kabel besteht aus mehreren optischen Elementen 2, welche von innen nach außen zunächst die Lichtwellenleiter 1 und eine eventuell vorhandene Füllsubstanz aufweisen, sowie eine metallische Hülle und einen Kunststoffmantel 7. Der Kunststoffmantel liefert auch das Material für die Stege 3 in Figur 1 sowie die Stege 4 in Figur 2, welche die einzelnen optischen Elemente miteinander verbinden. In Figur 1 ist dargestellt, wie die einzelnen Stege 3 die einzelnen optischen Elemente 2 mit einer Trägerplatte 5 verbinden. Diese Trägerplatte besteht beispielsweise aus einem Gewebeband 6, welches, wie auch die Einzelelemente, von dem gemeinsamen Mantel 7 umgeben ist. Bei dem in Figur 2 dargestellten Flachkabel befinden sich Stege lediglich zwischen den einzelnen Elementen, welche von einem gemeinsamen Mantel 8 umgeben sind. Um die einzelnen rohrförmigen Kammern leichter von dem Hauptkabel abtrennen zu können, sind einerseits die Stege so gestaltet, daß sich die einzelnen Elemente leicht von der Trägerplatte 5 einerseits und andererseits von den benachbarten Elementen trennen lassen. Außerdem sind die Kammern aus der Kunststoffummantelung 7 bzw. 8 leicht herauszulösen. Dazu ist zwischen den optischen Elementen und der Kunststoffummantelung 7 bzw. 8 ein Trennmittel vorgesehen. Die Hüllen der optischen Elemente 2 sind als zylindrische Rohre ausgebildet, welche beispielsweise aus Edelstahl bestehen. Die Rohre werden beispielsweise dadurch hergestellt, daß ein Band aus nichtrostendem Stahl um ein Bündel optischer Fasern herumgebogen und mit einer Längsnaht verschweißt wird.

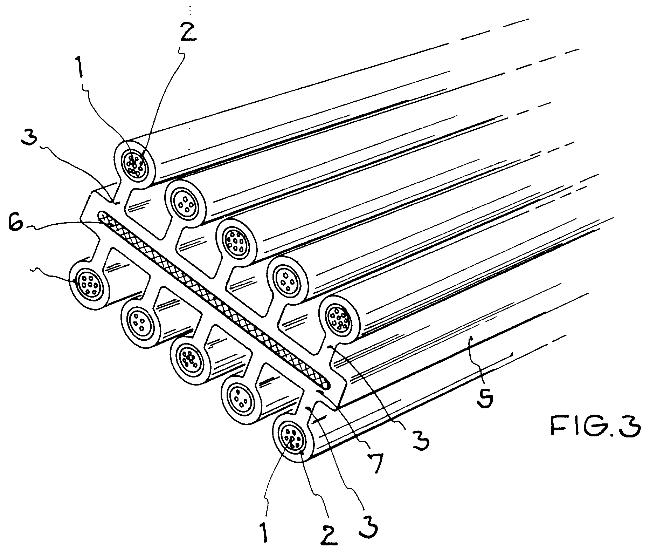

Bei einer Konstruktion nach Fig. 1 ist die Biegbarkeit eingeschränkt, wenn das Gewebeband 6 sich nicht dehnen oder stauchen läßt. Aus diesem Grunde ist es zweckmäßig, das Gewebeband in Längsrichtung dehnfähig auszubilden. Auch im Beispiel nach Fig. 3 ist keine besondere Biegbarkeit vorhanden, jedoch sind gegenüber der Ausführung eines Kabels gemäß Fig. 1 nun doppelt so viele optische Elemente vorhanden.

## Patentansprüche

1. Optisches Flachkabel mit Lichtwellenleitern in parallel einer Ebene angeordneten, langgestreckten, rohrförmigen Kammer, dadurch gekennzeichnet, daß die optischen Fasern (1) in Kammern (2) mit metallischer Wand mit Überlänge angeordnet sind, daß die Kammern mit Kunststoff ummantelt und derart verbunden sind, daß die Verbindungselemente (3, 4) auftrennbar und die längslaufenden Kammern (2) aus dem Flachkabel entnehmbar sind.

2. Optisches Flachkabel nach Anspruch 1, dadurch gekennzeichnet, daß die Verbindungselemente Stege (3) sind, welche aus Kunststoffummantelungsmaterial bestehen.

3. Optisches Flachkabel nach Anspruch 1 oder 2, dadurch gekennzeichnet, daß die Kammern (2) über die Stege (3) mit einer gemeinsamen Trägerplatte verbunden sind.

4. Optisches Flachkabel nach einem der Ansprüche 1 bis 3, dadurch gekennzeichnet, daß die Trägerplatte in Längsrichtung flexibel und in Querrichtung reißfest ausgebildet ist.

5. Optisches Flachkabel nach einem der Ansprüche 1 bis 4, dadurch gekennzeichnet, daß in die Trägerplatte (5) ein Gewebeband (6) eingebracht ist, dergestalt, daß die Kammern (2) und das Gewebeband von einem gemeinsamen Mantel (7) umgeben sind.

6. Optisches Flachkabel nach Anspruch 1, dadurch gekennzeichnet, daß die Verbindungselemente (4) von der die Kammern (2) umhüllenden Kunststoffummantelung (8) gebildet werden.

7. Optisches Flachkabel nach Anspruch 1 und 6, dadurch gekennzeichnet, daß in der Kunststoffummantelung (8) längs der Kammern (2) eine Soll-Schwachstelle vorgesehen ist.

8. Optisches Flachkabel nach einem der Ansprüche 1 bis 7, dadurch gekennzeichnet, daß zwischen den Kammern (2) und der Kunststoffummantelung (7, 8) ein Trennmittel vorgesehen ist.

9. Optisches Flachkabel nach einem der Ansprüche 1 bis 8, dadurch gekennzeichnet, daß die Kammern (2) als zylindrische Rohre ausgebildet sind.

10. Optisches Flachkabel nach dem der Ansprüche 1 bis 9, dadurch gekennzeichnet, daß die Rohre aus nichtrostendem Stahlblech hergestellt sind.
